# EUROPEAN PATENT SPECIFICATION

(11) **EP 3 568 296 B1**
(45) Date of publication and mention of the grant of the patent: **07.04.2021**
(21) Application number: 18700627.5
(22) Date of filing: 11.01.2018
(51) Int. Cl.: E04C 2/18, E04C 2/34, E04C 2/38, E04C 2/36, E06B 9/386, E04C 2/24, E04C 2/22, E04C 2/16, E06B 7/08, B32B 21/02, B32B 3/12, B32B 3/06, B32B 3/02, B32B 21/14, E04C 2/00, E04F 10/08

(54) **STRIP-SHAPED SANDWICH STRUCTURE AND A SLAT COMPRISING SUCH A STRIP-SHAPED SANDWICH STRUCTURE**
STREIFENFÖRMIGE SANDWICHSTRUKTUR UND LAMELLE MIT EINER SOLCHEN STREIFENFÖRMIGEN SANDWICHSTRUKTUR
STRUCTURE SANDWICH EN FORME DE LAMELLE ET LAMELLE COMPORTANT UNE TELLE STRUCTURE SANDWICH

(30) Priority: 11.01.2017 NL 2018154
(43) Date of publication of application: 20.11.2019
(73) Proprietor: Greenmarking B.V., 7418 CH Deventer (NL)
(72) Inventor: VAN DER HORST, Mark Wessel, 7418 CH Deventer (NL)
(74) Representative: Algemeen Octrooi- en Merkenbureau B.V.
(86) International application number: PCT/NL2018/050017
(87) International publication number: WO 2018/132002

(56) References cited:
- WO-A1-01/26899
- CN-A- 105 946 297
- JP-A- H 055 386
- US-A- 4 594 833
- US-A1- 2006 060 311
- US-A1- 2007 009 704
- US-A1- 2009 065 305

## Description

The present invention relates to a strip-shaped sandwich structure comprising two parallel cover plates made of fibreboard between which ribs extend for reinforcing the sandwich structure.

The strip-shaped sandwich structure according to the present invention has a thickness of between 10 mm - 20 mm. This thickness makes the sandwich structure suitable for use as slats of a sunblind.

This kind of sunblind consists of horizontal or vertical strips, also referred to as slats, which are available in various widths. These slats are typically made of aluminium, plastic, textile or wood. Furthermore, the slats are usually hung on the inside of a frame, because this makes them less susceptible to weather conditions. If desired, a blind may also be hung between two glass panes. This ensures that the blind does not become soiled, as a result of which it does not have to be cleaned. In many cases, the slats of a blind may be operated centrally by an operating chain or cord in order to regulate the amount of light which is allowed to pass through.

One of the drawbacks of the current slats is the fact that they are expensive or not sufficiently stiff. This means that the slats often suffer from an undesirable degree of sagging.

It is therefore an object of the present invention to provide a slat for use as a sunblind, which comprises a sandwich structure which is cost-efficient and sufficiently stiff, thus to a large degree preventing sagging.

The invention is defined by claim 1. Further embodiments are defined by the dependent claims. The invention provides a slat for use as a sun blind, which slat comprises a strip-shaped sandwich structure, comprising:
- two parallel cover plates, in which the cover plates are made of fibreboard and in which the cover plates are offset with respect to each other in a width direction;
- parallel length ribs which extend in the length direction, between the cover plates, for reinforcing the sandwich structure, in which the length ribs are made of fibreboard and are a mutual distance of between 20 mm - 40 mm apart;
- parallel width ribs which extend in the width direction, between the cover plates, for reinforcing the sandwich structure, in which the width ribs are made of fibreboard and are a mutual distance of between 10 mm - 150 mm apart;
- longitudinal side walls at both ends of the sandwich structure which extend between the cover plates, in the width direction, for sealing the sandwich structure, in which the longitudinal side walls are made of fibreboard and in which the longitudinal side walls comprise a stepped construction for accommodating an edge finish;
in which the cover plates, the length ribs and the width ribs are formed in such a way that a thickness of the sandwich structure is between 10 mm - 20 mm.

It was the insight of the inventor that a sandwich structure comprising cover plates and ribs can efficiently be used with a thickness of the sandwich structure of between 10 mm - 20 mm. Even at such a small thickness, the sandwich structure offers advantages with regard to stiffness and sagging. The thickness of this sandwich structure makes it extremely suitable for use as slats of a sunblind.

It was furthermore an insight of the inventor that the structure of cover plates and ribs makes it possible to use fibreboard material. Fibreboard is a material of a relatively low quality. However, said structure offers sufficient stiffness, even when using fibreboard for the cover plates and the ribs.

In the context of the present invention, fibreboard is seen as a panel which is composed of fibres to which a binder has been added. In principle, all kinds of fibres may be used, but in practice, wood chips are often used. Alternatively, straw, flax, optical fibre, sugarcane waste, carbon fibres and aramide fibres may be used.

Furthermore, there is a large diversity of binders which are suitable for use in manufacturing a fibreboard, such as thermoset, lignin or resin. Some examples of fibreboard are wood fibreboard, medium-density fibreboard (MDF), chipboard, hardboard, softboard, fibre-reinforced plastic and plywood.

In the context of the present invention, the longitudinal side walls are provided with a stepped construction for accommodating an edge finish. The stepped construction provides for, for example, an indentation or recess, which indentation may be used for mounting an edge finish.

In the inventive slat, the width of the sandwich structure is between 80 mm - 600 mm. The inventor has found that, with a total thickness of between 10 mm - 20 mm, the sandwich structure is still sufficiently stiff, provided that the width of the structure is at most 600 mm.

In a further embodiment, the offset of the two cover plates with respect to each other is between 5 mm - 15 mm. This has the advantage that sufficient space is created for fixing the longitudinal side walls, in such a way that the indentation which is provided offers sufficient space for an edge finish.

This offset makes it possible for the stepped construction of the longitudinal side walls to provide the indentation for fitting the edge finish.

In a further example, each of the cover plates has a thickness of between 2.5 mm - 4.5 mm.

In another example, the length ribs and the width ribs are attached to the cover plates by adhesive bonding.

As a result thereof, the ribs are fixedly positioned with respect to the cover plates, as a result of which a uniform support of the cover plates by the ribs is ensured.

Furthermore, a construction adhesive and/or a waterproof adhesive is preferably used, such as for example melamine adhesive. By means of adhesive bonding, it is possible to produce a strong connection between wood elements in a simple manner. Waterproof melamine adhesive is not susceptible to the action of moisture, which would make it possible to use the sandwich structure in moist environments as well.

In yet a further example, the cover plates, the width ribs, the length ribs and the longitudinal side walls are made of fibreboard having a mass density of between 400 kg/m³ - 900 kg/m³, preferably between 450 kg/m³ - 550 kg/m³.

In another example, the intersecting width ribs and length ribs are each provided with an indentation at their points of intersection in order to push the length ribs into the width ribs.

In this way, a diamond-shaped or rectangular pattern can easily be produced, which makes it possible to ensure that both sides of the strips contact the respective cover plates of the sandwich structure. In addition, this allows a kind of accordion action, as a result of which the shape of the system of ribs can be modified to some degree before the ribs are fitted between the cover plates.

In yet another example, at least part of the sandwich structure is treated with a water-repellent material.

This makes it possible to use the panel in moist or even wet conditions, in particular if ribs have been adhesively fixed using waterproof adhesive.

In an example, the length ribs are arranged at equal distances from one another. In another example, the width ribs are arranged at equal distances from one another.

Another advantage is the fact that this, on the one hand, makes it possible to produce relatively lightweight sandwich structures which, on the other hand, provide sufficient strength.

The advantage of these examples is that this results in a uniform distribution of the strength of the sandwich structure.

In an example, the cover plates, the length ribs and the width ribs are formed in such a way that a thickness of the sandwich structure is between 15 mm - 19 mm, preferably substantially 17 mm.

The present invention will be explained in more detail below by means of some preferred embodiments according to the present invention. In the explanation, reference will be made to the attached drawings, in which:

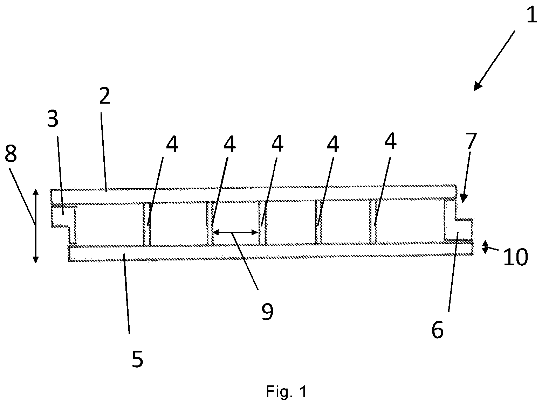

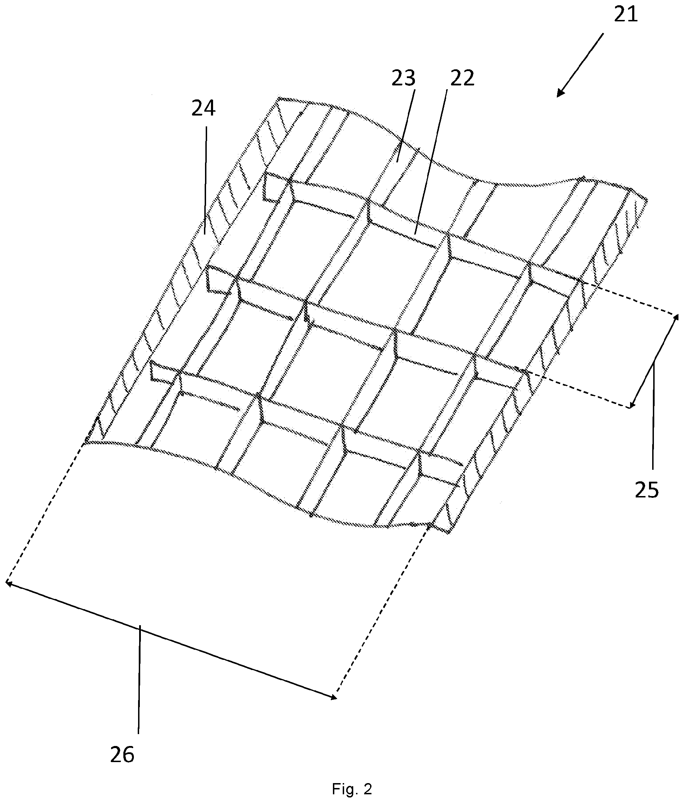

Fig. 1 shows a cross-sectional view of a sandwich structure as part of the sun blind slat according to the present invention; Fig. 2 shows a cut-away top view of a sandwich structure as part of the sun blind slat according to the present invention.

Looking at Fig. 1, a cross-sectional view 1 of a strip-shaped sandwich structure for a sunblind slat according to the present invention is shown. The sandwich structure is strip-shaped because the structure is longer than it is wide and because the structure has a small thickness. The structure is therefore elongate and has a small thickness.

The sandwich structure comprises two parallel cover plates 2, 5, in which the cover plates 2, 5 are made of fibreboard and in which the cover plates 2, 5 are offset with respect to each other in a width direction.

In this specific case, the top cover plate, denoted by reference numeral 2, is offset to the left with respect to the bottom cover plate, denoted by reference numeral 5. Furthermore, both cover plates 2, 5 are made of fibreboard, more specifically wood fibreboard.

Wood fibreboard is, for example, also suitable as insulating material and is very environmentally friendly. Typically, the material is a waste product of the wood industry. It allows air to pass through and has a moisture-regulating action. It is therefore highly suitable for use in said sandwich structure without damp inhibition or additional film/foil against moisture. The reason for this is that any absorbed moisture is released gradually and thus hardly influences atmospheric humidity. Wood fibres do not decay and can, in addition, constantly be re-used. It is therefore a maintenance-free insulating material.

A further additional advantage is the fact that wood fibreboard is fire-resistant and mould-resistant and is suitable as noise isolation.

The sandwich structure furthermore comprises, parallel length ribs 4 which extend in the length direction, between the cover plates 2, 5, for reinforcing the sandwich structure, in which the length ribs 4 are made of fibreboard and are a mutual distance of between 20 mm - 40 mm apart.

The length direction is defined as the direction at right angles to the figure. That is to say the figure in Fig. 1 shows the head ends of the length ribs 4. The length ribs 4 connect the cover plates 2, 5 to each other. Preferably, the cover plates 2, 5 are adhesively connected to the length ribs 4.

The distance 9 between the length ribs 4 is between 20 mm - 40 mm. Such a distance provides sufficient rigidity, and stiffness, to the sandwich structure. Preferably, the distance between the length ribs 4 is approximately equal. Furthermore preferably, the distance is preferably approximately 30 mm.

The strip-shaped sandwich structure furthermore comprises, parallel width ribs which extend in the width direction, between the cover plates 2, 5, (not shown in Fig. 1) for reinforcing the sandwich structure, in which the width ribs are made of fibreboard and are a mutual distance of between 10 mm - 150 mm apart.

These width ribs are not shown in Fig. 1 because they run from the left-hand side of the sandwich structure to the right-hand side, or vice versa. The width ribs are shown in Fig. 2 and will be explained further in the relevant explanation.

Furthermore, the sandwich structure comprises, at both ends of the sandwich structure, longitudinal side walls 3, 6 which extend in the width direction, between the cover plates 2, 5, for sealing the sandwich structure, in which the longitudinal side walls 3, 6 are made of fibreboard and in which the longitudinal side walls comprise a stepped construction 7 for accommodating an edge finish.

According to the present invention, the cover plates 2, 5, the length ribs 4 and the width ribs are formed in such a way that the thickness 8 of the sandwich structure is between 10 mm - 20 mm. In order to achieve this, the thickness 10 of the cover plates 2, 5 is typically about 3 mm.

The width of the sandwich structure is typically between 80 mm - 600 mm. The width is the distance from the left-hand side of the sandwich structure to the right-hand side of the sandwich structure, as illustrated in Fig. 1.

Fig. 2 shows a cut-away top view 21 of a sandwich structure as part of the sun blind slat according to the present invention.

In this figure, the length ribs are denoted by reference numeral 23 and the width ribs are denoted by reference numeral 22. The total width is denoted by reference numeral 26 and is, as has already been explained above, typically 80 mm - 600 mm. One of the two longitudinal side walls is denoted by reference numeral 24.

The distance 25 between the width ribs 22 is typically 10 mm - 150 mm, preferably 110 mm - 130 mm, still more preferably substantially 120 mm.

Intersecting width ribs 22 and length ribs 23 are each provided with an indentation at their points of intersection in order to push the length ribs 23 into the width ribs 22.

The above description and the figures are only shown to clarify the invention and by no means limit the scope of protection of the invention, which is defined by the attached claims. The slat according to the present invention may, for example, be used when stiffness in the direction at right angles to the plane of the slat is important and/or when the weight of the slat is an important aspect. Environmental aspects may also play a part when deciding to use a slat according to the present invention.

## Claims

1. Slat for use as a sunblind, in which the slat comprises a strip-shaped sandwich structure, said sandwich structure comprising:
- two parallel cover plates, in which the cover plates are made of fibreboard and in which the cover plates are offset with respect to each other in a width direction;
- parallel length ribs which extend in the length direction, between the cover plates, for reinforcing the sandwich structure, in which the length ribs are made of fibreboard and are a mutual distance of between 20 mm - 40 mm apart;
- parallel width ribs which extend in the width direction, between the cover plates, for reinforcing the sandwich structure, in which the width ribs are made of fibreboard and are a mutual distance of between 10 mm - 150 mm apart;
- longitudinal side walls at both ends of the sandwich structure which extend between the cover plates, in the width direction, for sealing the sandwich structure, in which the longitudinal side walls are made of fibreboard and in which the longitudinal side walls comprise a stepped construction for accommodating an edge finish;
in which the cover plates, the length ribs and the width ribs are formed in such a way that a thickness of the sandwich structure is between 10 mm - 20 mm, further wherein the width of the sandwich structure is between 80 mm - 600 mm.

2. Slat according to claim 1, in which the offset of the two cover plates with respect to each other is between 5 mm - 15 mm.

3. Slat according to one of the preceding claims, in which each of the cover plates has a thickness of between 2.5 mm - 4.5 mm.

4. Slat according to one of the preceding claims, in which the length ribs and the width ribs are attached to the cover plates by adhesive bonding.

5. Slat according to one of the preceding claims, in which the cover plates, the width ribs, the length ribs and the longitudinal side walls are made of fibreboard having a mass density of between 400 kg/m³ - 900 kg/m³, preferably between 450 kg/m³ - 550 kg/m³.

6. Slat according to one of the preceding claims, in which intersecting width ribs and length ribs are each provided with an indentation at their points of intersection in order to push the length ribs into the width ribs.

7. Slat according to one of the preceding claims, in which at least a part of the sandwich structure is treated with a water-repellent material.

8. Slat according to one of the preceding claims, in which the length ribs are arranged at equal distances from one another.

9. Slat according to one of the preceding claims, in which the width ribs are arranged at equal distances from one another.

10. Slat according to one of the preceding claims, in which the cover plates, the length ribs and the width ribs are formed in such a way that a thickness of the sandwich structure is between 15 mm - 19 mm, preferably 17 mm.

## Patentansprüche

1. Lamelle zur Verwendung als eine Sonnenblende, wobei die Lamelle eine streifenförmige Sandwichstruktur umfasst, wobei die Sandwichstruktur Folgendes umfasst:
- zwei parallele Abdeckplatten, wobei die Abdeckplatten aus Faserplatte gefertigt sind und wobei die Abdeckplatten bezüglich zueinander in einer Breitenrichtung versetzt sind;
- parallele Längsrippen, die sich, zwischen den Abdeckplatten, in der Längsrichtung erstrecken, zum Verstärken der Sandwichstruktur, wobei die Längsrippen aus Faserplatte gefertigt sind und einen gegenseitigen Abstand von zwischen 20 mm - 40 mm aufweisen;
- parallele Querrippen, die sich, zwischen den Abdeckplatten, in der Querrichtung erstrecken, zum Verstärken der Sandwichstruktur, wobei die Querrippen aus Faserplatte gefertigt sind und einen gegenseitigen Abstand von zwischen 10 mm - 150 mm aufweisen;
- längs verlaufende Seitenwände an beiden Enden der Sandwichstruktur, die sich, in der Querrichtung, zwischen den Abdeckplatten erstrecken zum Abdichten der Sandwichstruktur, wobei die längs verlaufenden Seitenwände aus Faserplatte gefertigt sind und wobei die längs verlaufenden Seitenwände einen gestuften Aufbau zum Aufnehmen einer Kantenoberfläche umfassen;
wobei die Abdeckplatten, die Längsrippen und die Querrippen in einer Weise gebildet sind, dass eine Dicke der Sandwichstruktur zwischen 10 mm - 20 mm ist, wobei ferner die Breite der Sandwichstruktur zwischen 80 mm - 600 mm ist.

2. Lamelle nach Anspruch 1, wobei der Versatz der zwei Abdeckplatten bezüglich zueinander zwischen 5 mm - 15 mm ist.

3. Lamelle nach einem der vorhergehenden Ansprüche, wobei die Abdeckplatten eine Dicke von zwischen 2,5 mm - 4,5 mm haben.

4. Lamelle nach einem der vorhergehenden Ansprüche, wobei die Längsrippen und die Querrippen mittels Adhäsionskleben an den Abdeckplatten befestigt sind.

5. Lamelle nach einem der vorhergehenden Ansprüche, wobei die Abdeckplatten, die Querrippen, die Längsrippen und die längs verlaufenden Seitenwände aus Faserplatte mit einer Massendichte von zwischen 400 kg/m³ - 900 kg/m³, vorzugsweise zwischen 450 kg/m³ - 550 kg/m³ gefertigt sind.

6. Lamelle nach einem der vorhergehenden Ansprüche, wobei sich schneidende Querrippen und Längsrippen jeweils mit einer Einkerbung an ihren Schnittpunkten versehen sind, um die Längsrippen in die Querrippen zu drücken.

7. Lamelle nach einem der vorhergehenden Ansprüche, wobei zumindest ein Teil der Sandwichstruktur mit einem wasserabweisenden Material behandelt ist.

8. Lamelle nach einem der vorhergehenden Ansprüche, wobei die Längsrippen bei gleichen Abständen voneinander angeordnet sind.

9. Lamelle nach einem der vorhergehenden Ansprüche, wobei die Querrippen bei gleichen Abständen voneinander angeordnet sind.

10. Lamelle nach einem der vorhergehenden Ansprüche, wobei die Abdeckplatten, die Längsrippen und die Querrippen in einer Weise gebildet sind, dass eine Dicke der Sandwichstruktur zwischen 15 mm - 19 mm, vorzugsweise 17 mm, ist.

## Revendications

1. Lamelle pour une utilisation comme un store pare-soleil, dans laquelle la lamelle comprend une structure sandwich en forme de bandes, ladite structure sandwich comprenant :
- deux plaques de recouvrement parallèles, où les plaques de recouvrement sont réalisées en panneau de fibres et où les plaques de recouvrement sont décalées l'une par rapport à l'autre dans une direction de largeur ;
- des nervures en longueur parallèles qui s'étendent dans la direction de la longueur, entre les plaques de recouvrement, pour renforcer la structure sandwich, où les nervures en longueur sont réalisées en panneau de fibres et sont espacées les unes des autres d'une distance comprise entre 20 mm et 40 mm ;
- des nervures en largeur parallèles qui s'étendent dans la direction de la largeur, entre les plaques de recouvrement, pour renforcer la structure sandwich, où les nervures en largeur sont réalisées en panneau de fibres et sont espacées les unes des autres d'une distance comprise entre 10 mm et 150 mm ;
- des parois latérales longitudinales aux deux extrémités de la structure sandwich qui s'étendent entre les plaques de recouvrement, dans la direction de la largeur, pour assurer l'étanchéité de la structure sandwich, où les parois latérales longitudinales sont réalisées en panneau de fibres et où les parois latérales longitudinales comprennent une construction étagée pour recevoir une finition de chant ;
où les plaques de recouvrement, les nervures en longueur et les nervures en largeur sont formées de sorte qu'une épaisseur de la structure sandwich soit comprise entre 10 mm et 20 mm, en outre où la largeur de la structure sandwich est comprise entre 80 mm et 600 mm.

2. Lamelle selon la revendication 1, dans laquelle le décalage des deux plaques de recouvrement l'une par rapport à l'autre est compris entre 5 mm et 15 mm.

3. Lamelle selon l'une des revendications précédentes, dans laquelle chacune des plaques de recouvrement a une épaisseur comprise entre 2,5 mm et 4,5 mm.

4. Lamelle selon l'une des revendications précédentes, dans laquelle les nervures en longueur et les nervures en largeur sont fixées aux plaques de recouvrement par collage adhésif.

5. Lamelle selon l'une des revendications précédentes, dans laquelle les plaques de recouvrement, les nervures en largeur, les nervures en longueur et les parois latérales longitudinales sont réalisées en panneau de fibres ayant une masse volumique comprise entre 400 kg/m³ et 900 kg/m³, de préférence entre 450 kg/m³ et 550 kg/m³.

6. Lamelle selon l'une des revendications précédentes, dans laquelle des nervures en largeur et des nervures en longueur entrecroisées sont munies chacune d'une indentation à leurs points d'intersection pour pousser les nervures en longueur dans les nervures en largeur.

7. Lamelle selon l'une des revendications précédentes, dans laquelle au moins une partie de la structure sandwich est traitée avec un matériau hydrofuge.

8. Lamelle selon l'une des revendications précédentes, dans laquelle les nervures en longueur sont agencées à égales distances les unes des autres.

9. Lamelle selon l'une des revendications précédentes, dans laquelle les nervures en largeur sont agencées à égales distances les unes des autres.

10. Lamelle selon l'une des revendications précédentes, dans laquelle les plaques de recouvrement, les nervures en longueur et les nervures en largeur sont formées de sorte qu'une épaisseur de la structure sandwich soit comprise entre 15 mm et 19 mm, de préférence de 17 mm.
